# EUROPEAN PATENT APPLICATION

(11) **EP 4 822 477 A1**
(43) Date of publication of application: **14.10.2026**
(21) Application number: 26161888.8
(22) Date of filing: 03.03.2026
(51) Int. Cl.: G05D 1/60

(54) **SYSTEMS AND METHODS FOR DETERMINING A CENTER PIVOT POINT OF A CIRCULAR PATH BASED ON AUTONOMOUS DETECTION OF A PRELIMINARY ARC**

(30) Priority: 08.04.2025 GB 202505239
(71) Applicant: AGCO International GmbH, 8212 Neuhausen am Rheinfall (CH)
(72) Inventor: Kelber, Christian Roberto, 87616 Marktoberdorf (DE); Vogler, Theo, 87616 Marktoberdorf (DE)
(74) Representative: AGCO Intellectual Property Department

(57) **Abstract**

A vehicle navigation system may include processor(s). The system may include data storage device(s) having computer-readable instructions stored thereon, where the computer-readable instructions may be configured to instruct the processor(s) to automatically detect, from a digital image estimating a view from a vehicle, a preliminary arc comprising an estimate of a portion of a path to be traversed by the vehicle. The path may be at least substantially circular. The system may determine an estimate of the path based, at least in part, on the preliminary arc. The system may provide vehicle guidance to guide motion of the vehicle along the estimated path. The system may determine a center pivot point of the path based, at least in part, on the estimated path and adjustments made to the motion of the vehicle away from the estimated path.

## Description

### CROSS-REFERENCE TO RELATED APPLICATIONS

### FIELD

This disclosure relates generally to systems and/or methods for operating a vehicle, and more specifically to determining a center pivot point of a circular path.

### BACKGROUND

Agricultural and other heavy-equipment machinery commonly use automated guidance systems to assist users in operating the machines through land areas, such as through crop fields. For example, guidance systems may be used to control a machine's speed and/or steering in order to, for example, direct the machine along a precise path through a field. As another example, guidance systems may be useful when users (e.g., farmers) utilize machines (e.g., farming equipment) to work (e.g., farm) large, uneven, and/or odd-shaped fields. As another example, guidance systems may increase the efficiency by selecting a path or pattern of paths that may lower time spent in the field and/or increase operational efficiency of the machines.

Some guidance systems may be configured to control a machine's traversal through a field based on available digital maps of the field. Often, such maps may include simple and/or two-dimensional (2D) representations of the field's topological features (e.g., terrain). The 2D maps may represent the field's terrain with reference to a plane perpendicular to the earth's center (e.g., a reference plane), with such reference plane often being tangent to a flat surface of the earth and/or a reference ellipsoid (e.g., WGS-84). Thus, the 2D maps may be similar to a top plan view of the field, such as might be expected from a satellite image.

However, for a field with uneven terrain, undulating terrain, sloped terrain, or with a terrain that otherwise includes summits, breaks, ridges, valleys, pits, and/or cols, the use of 2D maps may result in deviations from the field's actual terrain because the height and slope (e.g., gradient) of the field's actual terrain may not accurately correspond with the reference plane of the 2D map. These inconsistencies may often not be appropriately taken into consideration by a machine's guidance system(s), which can lead to inaccurate and/or inefficient control of the machine through the field.

Some guidance systems may use more complex three-dimensional (3D) maps, which may include a 3D representation of a field, including height values (e.g., z-coordinate data) and lateral values (e.g., x- and/or y-coordinate data) for the field. It may often be difficult, however, to obtain such 3D maps with the appropriate level of precision needed to achieve the required level of accuracy for the particular work to be performed within the field. For example, when having a small amount of data, the guidance system may lead to inaccurate and/or inefficient control of the machine through the field. As another example, when having a large amount of data (e.g., as may be the case with 3D representations), the guidance system may become inefficient and may, more generally, bog down due to the requirements of data storage and/or data processing.

### BRIEF SUMMARY

Examples of systems are disclosed herein. In some embodiments, an example vehicle navigation system may include one or more processors. The vehicle navigation system may include one or more data storage devices having computer-readable instructions stored thereon, where the computer-readable instructions may be configured to instruct the one or more processors to obtain a preliminary arc includes an estimate of a portion of a path to be traversed by a vehicle. The path may be at least substantially circular. The vehicle navigation system may determine an estimate of the path based, at least in part, on the preliminary arc. The vehicle navigation system may provide vehicle guidance to guide motion of the vehicle along the estimated path. The vehicle navigation system may determine a center pivot point of the path based, at least in part, on the estimated path and adjustments made to the motion of the vehicle away from the estimated path.

Additionally, or alternatively, the computer-readable instructions may be configured to instruct the one or more processors to obtain the preliminary arc by recording two or more position points passed through by a vehicle along a preliminary portion of the path, and/or determining the preliminary arc based, at least in part, on the two or more position points.

Additionally, or alternatively, the computer-readable instructions may be configured to instruct the one or more processors to determine the preliminary arc by interpolating the two or more position points.

Additionally, or alternatively, the adjustments made to the motion of the vehicle away from the estimated path may be made by a user interaction with nudge buttons.

Additionally, or alternatively, the vehicle navigation system may include a joystick including the nudge buttons.

Additionally, or alternatively, the computer-readable instructions may be configured to instruct the one or more processors to determine a subsequent path to be traversed by the vehicle based, at least in part, on the center pivot point, the subsequent path at least substantially circular, a diameter of the subsequent path different from a diameter of the path.

Additionally, or alternatively, the vehicle may include an agricultural machine.

Examples of systems are disclosed herein. In some embodiments, an example vehicle navigation system may include one or more processors. The vehicle navigation system may include one or more data storage devices having computer-readable instructions stored thereon, where the computer-readable instructions may be configured to instruct the one or more processors to track a position of a vehicle as the vehicle is driven over a portion of a path to be traversed by the vehicle. The path may be at least substantially circular. The vehicle navigation system may determine a preliminary arc. The vehicle navigation system may estimate the portion of the path. The vehicle navigation system may determine an estimate of a remainder of the path based, at least in part, on the preliminary arc. The vehicle navigation system may provide vehicle guidance to guide motion of the vehicle along the estimate of the remainder of the path. The vehicle navigation system may determine a center pivot point of the path based, at least in part, on the estimate of the remainder of the path and adjustments made to the motion of the vehicle away from the estimate of the remainder of the path.

Additionally, or alternatively, the computer-readable instructions may be configured to instruct the one or more processors to: determine one or more subsequent paths to be traversed by the vehicle based, at least in part, on the center pivot point, the one or more subsequent paths at least substantially circular and having diameters different from a diameter of the path; and/or provide vehicle guidance to guide motion of the vehicle along the one or more subsequent paths.

Additionally, or alternatively, the adjustments may be made to the motion of the vehicle away from the estimate of the remainder of the path are made using a device other than a steering wheel of the vehicle.

Additionally, or alternatively, the adjustments may be made to the motion of the vehicle away from the estimate of the remainder of the path are made by user interactions with nudge buttons of a joystick device.

Additionally, or alternatively, the computer-readable instructions may be configured to instruct the one or more processors to determine the estimate of the path based, at least in part, on an extrapolation from the preliminary arc.

Additionally, or alternatively, the computer-readable instructions may be configured to instruct the one or more processors to transition from tracking the position of the vehicle to determining the preliminary arc responsive to a user input received from a human user.

Additionally, or alternatively, the computer-readable instructions may be configured to track the position of the vehicle based, at least in part, on signals received from a global navigation satellite system (GNSS).

Examples of methods are disclosed herein. In some embodiments, an example method of operating a vehicle navigation system is disclosed herein. The method may include recording two or more position points passed through by a vehicle along a portion of a path to be traversed by the vehicle. The path may be at least substantially circular. The method may include determining a preliminary arc based, at least in part, on the two or more position points. The method may include determining an estimate of a remainder of the path based, at least in part, on the preliminary arc. The method may include engaging a guidance system to provide vehicle guidance to guide motion of the vehicle along the estimate of the remainder of the path. The method may include determining a center pivot point of the path based, at least in part, on the estimated of the remainder of the path and adjustments made to the motion of the vehicle away from the estimate of the remainder of the path.

Additionally, or alternatively, the method may include determining a preliminary center pivot point of the path based, at least in part, on the preliminary arc or the estimate of the remainder of the path.

Additionally, or alternatively, the method may include determining the center pivot point of the path by updating the preliminary center pivot point based, at least in part, on the estimate of the remainder of the path and the adjustments made to the motion of the vehicle away from the estimate of the path.

Additionally, or alternatively, the method may include determining an estimate of the remainder of the path by fitting points of the preliminary arc to a mathematical equation defining a circle; and/or extrapolating the estimate of the remainder of the path using the mathematical equation.

Additionally, or alternatively, the method may include determining the center pivot point of the path by fitting points traversed by the vehicle along the path to a mathematical equation defining a circle; and/or determining the center pivot point to be a center point of the circle.

Additionally, or alternatively, the method may include determining the preliminary center pivot point based, at least in part, on the estimate of the remainder of the path.

Examples of methods are disclosed herein. In some embodiments, an example a method of operating a vehicle navigation system may include includes positioning a vehicle at a starting point of a path to be traversed by the vehicle. The path may be at least substantially circular. The vehicle may be positioned with a forward direction of the vehicle facing in a tangential direction to the path. The method may include obtaining a preliminary arc that includes an estimate of a portion of the path. The method may include determining an estimate of the path based, at least in part, on the preliminary arc. The method may include providing vehicle guidance to guide the vehicle along the estimated path. The method may include determining a center pivot point of the path based, at least in part, on the estimate of the path and adjustments made to the motion of the vehicle away from the estimated path.

Additionally, or alternatively, the method may further include determining a subsequent path based, at least in part, on the center pivot point, the subsequent path at least substantially circular.

Additionally, or alternatively, the method may further include providing vehicle guidance to guide the vehicle along the subsequent path.

Additionally, or alternatively, obtaining the preliminary arc may include: displaying, on an electronic display, a graphical user interface (GUI) including a field to display a digital image of a forward view from the vehicle; overlaying a preliminary arc onto the digital image, the preliminary arc estimating a forward trajectory of the vehicle; and/or adjusting a curvature of the preliminary arc based, at least in part, on inputs received from a user.

Examples systems are disclosed herein. In some embodiments, an example vehicle navigation system may include one or more processors. The vehicle navigation system may also include one or more data storage devices having computer-readable instructions stored thereon, where the computer-readable instructions may be configured to instruct the one or more processors to present a graphical user interface (GUI) on an electronic display, where the GUI may include a field to display a digital image corresponding to an estimate of a view from a vehicle. The computer-readable instructions may be configured to instruct the one or more processors to overlay a preliminary arc onto the digital image, where the preliminary arc may estimate a trajectory of motion for the vehicle. The computer-readable instructions may be configured to instruct the one or more processors to modify a curvature of the preliminary arc responsive to user inputs received via one or more input devices. The computer-readable instructions may be configured to instruct the one or more processors to determine an estimate of a path to be traversed by the vehicle based, at least in part, on the preliminary arc. The path may be at least substantially circular. The computer-readable instructions may be configured to instruct the one or more processors to provide vehicle guidance to guide the vehicle along the estimated path. The computer-readable instructions may be configured to instruct the one or more processors to determine a center pivot point of the path based, at least in part, on the estimated path and adjustments made to motion of the vehicle away from the estimated path.

Additionally, or alternatively, the computer-readable instructions may be further configured to: instruct the one or more processors to determine one or more subsequent paths to be traversed by the vehicle based, at least in part, on the center pivot point, the one or more subsequent paths at least substantially circular and having diameters different from a diameter of the path; and/or provide vehicle guidance to guide motion of the vehicle along the one or more subsequent paths.

Additionally, or alternatively, the adjustments made to the motion of the vehicle away from the estimated path may be made using a device other than a steering wheel of the vehicle.

Additionally, or alternatively, the adjustments made to the motion of the vehicle away from the estimated path may be made by user interactions with nudge buttons of a joystick device.

Additionally, or alternatively, the computer-readable instructions may be configured to instruct the one or more processors to determine the estimate of the path based, at least in part, on an extrapolation from the preliminary arc.

Additionally, or alternatively, the one or more input devices may include a touchscreen sensor of the electronic display.

Additionally, or alternatively, the one or more input devices may include a steering device of the vehicle.

Additionally, or alternatively, the steering device of the vehicle may include one or more of a steering wheel or nudge buttons of a joystick.

Additionally, or alternatively, the vehicle navigation system may include the digital display being mounted in a cockpit of the vehicle.

Additionally, or alternatively, the vehicle may be and/or include an agricultural machine.

Example methods are disclosed herein. In some embodiment, an example method of operating a vehicle navigation system may include displaying, on an electronic display, a graphical user interface (GUI) including a field to display a digital image of a view from a vehicle. The method may include overlaying a preliminary arc onto the digital image, where the preliminary arc may estimate a forward trajectory of the vehicle. The method may include adjusting a curvature of the preliminary arc based, at least in part, on inputs received from a user. The method may include determining an estimate of the path based, at least in part, on the preliminary arc. The method may include providing vehicle guidance to guide the vehicle along the estimate of the path. The method may include determining a center pivot point of the path based, at least in part, on the estimate of the path and adjustments made to the motion of the vehicle away from the estimate of the path.

Additionally, or alternatively, the view from the vehicle may include an estimate of a cockpit view from a cockpit of the vehicle.

Additionally, or alternatively, the method may also include determining an estimate of the path based, at least in part, on the preliminary arc that includes converting image spatial coordinates of points of the preliminary arc to navigational coordinates of the points of the preliminary arc.

Additionally, or alternatively, determining an estimate of the path may further include fitting the navigational coordinates of the points of the preliminary arc to a portion of a circle using a mathematical function defining the circle; and/or extrapolating the estimate of the path based, at least in part, on the mathematical function.

Additionally, or alternatively, the method may include determining a preliminary center pivot point of the path by determining a center point of the circle defined by the mathematical function.

Additionally, or alternatively, the determination of the center pivot point may include fitting navigational coordinates of an actual path traversed by the vehicle to a circle using a mathematical function defining the circle; and/or determining the center pivot point of the path to be a center point of the circle defined by the mathematical function.

Example systems are disclosed herein. In some embodiments, an example vehicle navigation system may include one or more processors. The vehicle navigation system may also include one or more data storage devices having computer-readable instructions stored thereon, where the computer-readable instructions may be configured to instruct the one or more processors to automatically detect, from a digital image estimating a view from a vehicle. The preliminary arc may include an estimate of a portion of a path to be traversed by the vehicle, where the path may be at least substantially circular. The computer-readable instructions may be configured to instruct the one or more processors to determine an estimate of the path based, at least in part, on the preliminary arc. The computer-readable instructions may be configured to instruct the one or more processors to provide vehicle guidance to guide motion of the vehicle along the estimated path. The computer-readable instructions may be configured to instruct the one or more processors to determine a center pivot point of the path based, at least in part, on the estimated path and adjustments made to the motion of the vehicle away from the estimated path.

Additionally, or alternatively, the computer-readable instructions may be further configured to instruct the one or more processors to: determine one or more subsequent paths to be traversed by the vehicle based, at least in part, on the center pivot point, the one or more subsequent paths at least substantially circular and having diameters different from a diameter of the path; and/or provide vehicle guidance to guide motion of the vehicle along the one or more subsequent paths.

Additionally, or alternatively, the adjustments made to the motion of the vehicle away from the estimated path may be made using a device other than a steering wheel of the vehicle.

Additionally, or alternatively, the adjustments made to the motion of the vehicle away from the estimated path may be made by user interactions with nudge buttons of a joystick device.

Additionally, or alternatively, the computer-readable instructions may be configured to instruct the one or more processors to determine the estimate of the path based, at least in part, on an extrapolation from the preliminary arc.

Additionally, or alternatively, vehicle navigation system may include an image capture system (sometimes may be referred to herein as a "sensor system") secured to the vehicle, where the image capture system may be configured to capture digital images to be used for automatically detecting the preliminary arc.

Additionally, or alternatively, the image capture system may include a digital camera system.

Additionally, or alternatively, the image capture system may include a light detection and ranging (LiDAR) system.

Additionally, or alternatively, the computer-readable instructions may be further configured to instruct the one or more processors to detect the preliminary arc by detecting a curve shown by the digital image.

Additionally, or alternatively, the computer-readable instructions may be further configured to instruct the one or more processors to detect the preliminary arc by detecting tire tracks in the digital image.

Additionally, or alternatively, the computer-readable instructions may be further configured to instruct the one or more processors to detect the preliminary arc by detecting a vegetation edge in the digital image.

Additionally, or alternatively, the computer-readable instructions may be further configured to instruct the one or more processors to detect the preliminary arc by detecting an edge of a field shown in the digital image.

Example methods are disclosed herein. In some embodiments, an example method of operating a vehicle navigation system may include processing a digital image taken of a view from a vehicle to detect a preliminary arc includes an estimate of a portion of a path to be traversed by the vehicle. The path may be at least substantially circular. The method may include determining an estimate of the path based, at least in part, on the preliminary arc. The method may include providing vehicle guidance to guide the vehicle along the estimate of the path. The method may include determining a center pivot point of the path based, at least in part, on the estimate of the path and adjustments made to the motion of the vehicle away from the estimate of the path.

Additionally, or alternatively, the processing of the digital image may include using edge detection to detect the preliminary arc.

Additionally, or alternatively, the processing of the digital image may include detecting tire tracks in the digital image to detect the preliminary arc.

Additionally, or alternatively, the processing of the digital image may include detecting an edge of vegetation to detect the preliminary arc.

Additionally, or alternatively, the method may include determining an estimate of the path by: converting image spatial coordinates of points of the preliminary arc to navigational coordinates of the points of the preliminary arc; fitting the navigation coordinates of the points of the preliminary arc to a portion of a circle using a mathematical function defining the circle; and/or extrapolating the estimate of the path based, at least in part, on the mathematical function.

Additionally, or alternatively, the determining of a center pivot point of the path may include fitting navigational coordinates of an actual path traversed by the vehicle to a circle using a mathematical function defining the circle; and/or determining the center pivot point of the path to be a center point of the circle defined by the mathematical function.

Example systems are disclosed herein. In some embodiments, an example vehicle navigation system may include a vehicle. The vehicle navigation system may also include an imaging system secured to the vehicle, where the imaging system may be configured to capture a digital image of a view from the vehicle. The vehicle navigation system may also include one or more processors configured to detect a preliminary arc from the digital image, where the preliminary arc may define a portion of a path to be traversed by the vehicle. The path may be at least substantially circular. The one or more processors may be configured to determine an estimate of the path based, at least in part, on the preliminary arc. The vehicle navigation system may also include a vehicle guidance system configured to guide the vehicle along the estimate of the path. The one or more processors may further be configured to determine the center pivot point of the path based, at least in part, on the estimate of the path and adjustments made to the motion of the vehicle away from the estimate of the path.

Additionally, or alternatively, the vehicle may be and/or include an agricultural machine.

Within the scope of this application, it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

One or more embodiments of the invention / disclosure will now be described, by way of example only, with reference to the accompanying drawings, in which:
FIG. 1 is a diagram illustrating a circle area, a pivot of the circle area, and a plurality of paths of a vehicle around the pivot, according to some embodiments;
FIG. 2 is a block diagram illustrating a vehicle navigation system, according to some embodiments;
FIG. 3 is a diagram illustrating an inside view of a cabin of a vehicle, according to some embodiments;
FIG. 4 is a flowchart illustrating a method of operating a vehicle navigation system, according to some embodiments;
FIG. 5 is a flowchart illustrating a method of operating a navigation system involving determining a preliminary arc based on points passed through by a vehicle, according to some embodiments;
FIG. 6 is a flowchart illustrating a method of operating a navigation system involving overlaying a preliminary arc onto a digital image, according to some embodiments;
FIG. 7 is a front view of an electronic display presenting an example of a graphical user interface (GUI) including a field to display a digital image of a view from a vehicle;
FIG. 8 is a flowchart illustrating a method of operating a navigation system involving detecting a preliminary arc in a digital image, according to some embodiments; and
FIG. 9 is a front view of an example of a digital image that may be processed to detect a preliminary arc.

### DETAILED DESCRIPTION

In the following detailed description, reference is made to the accompanying drawings, which form a part hereof, and in which are shown, by way of illustration, specific examples of embodiments in which the present disclosure may be practiced. These embodiments are described in sufficient detail to enable a person of ordinary skill in the art to practice the present disclosure. However, other embodiments enabled herein may be utilized, and structural, material, and process changes may be made without departing from the scope of the disclosure.

The illustrations presented herein are not meant to be actual views of any particular method, system, device, and/or structure, but are merely idealized representations that are employed to describe the embodiments of the present disclosure. In some instances, similar structures or components in the various drawings may retain the same or similar numbering for the convenience of the reader; however, the similarity in numbering does not necessarily mean that the structures or components are identical in size, composition, configuration, or any other property.

The following description may include examples to help enable one of ordinary skill in the art to practice the disclosed embodiments. The use of the terms "exemplary," "by example," and "for example," means that the related description is explanatory, and though the scope of the disclosure is intended to encompass the examples and legal equivalents, the use of such terms is not intended to limit the scope of an embodiment or this disclosure to the specified components, steps, features, functions, or the like.

It will be readily understood that the components of the embodiments as generally described herein and illustrated in the drawings could be arranged and designed in a wide variety of different configurations. Thus, the following description of various embodiments is not intended to limit the scope of the present disclosure, but is merely representative of various embodiments. While the various aspects of the embodiments may be presented in the drawings, the drawings are not necessarily drawn to scale unless specifically indicated.

Furthermore, specific implementations shown and described are only examples and should not be construed as the only way to implement the present disclosure unless specified otherwise herein. Elements, circuits, and functions may be shown in block diagram form in order not to obscure the present disclosure in unnecessary detail. Conversely, specific implementations shown and described are exemplary only and should not be construed as the only way to implement the present disclosure unless specified otherwise herein. Additionally, block definitions and partitioning of logic between various blocks is exemplary of a specific implementation. It will be readily apparent to one of ordinary skill in the art that the present disclosure may be practiced by numerous other partitioning solutions. For the most part, details concerning timing considerations and the like have been omitted where such details are not necessary to obtain a complete understanding of the present disclosure and are within the abilities of persons of ordinary skill in the relevant art.

Those of ordinary skill in the art will understand that information and signals may be represented using any of a variety of different technologies and techniques. Some drawings may illustrate signals as a single signal for clarity of presentation and description. It will be understood by a person of ordinary skill in the art that the signal may represent a bus of signals, wherein the bus may have a variety of bit widths, and the present disclosure may be implemented on any number of data signals including a single data signal.

The embodiments may be described in terms of a process that is depicted as a flowchart, a flow diagram, a structure diagram, or a block diagram. Although a flowchart may describe operational acts as a sequential process, many of these acts can be performed in another sequence, in parallel, or substantially concurrently. In addition, the order of the acts may be re-arranged. A process may correspond to a method, a thread, a function, a procedure, a subroutine, a subprogram, other structure, or combinations thereof. Furthermore, the methods disclosed herein may be implemented in hardware, software, or both. If implemented in software, the functions may be stored or transmitted as one or more instructions or code on computer-readable media. Computer-readable media includes both computer storage media and communication media including any medium that facilitates transfer of a computer program from one place to another.

Any reference to an element herein using a designation such as "first," "second," and so forth does not limit the quantity or order of those elements, unless such limitation is explicitly stated. Rather, these designations may be used herein as a convenient method of distinguishing between two or more elements or instances of an element. Thus, a reference to first and second elements does not mean that only two elements may be employed there or that the first element must precede the second element in some manner. In addition, unless stated otherwise, a set of elements may include one or more elements.

As used herein, the term "substantially" in reference to a given parameter, property, or condition means and includes to a degree that one of ordinary skill in the art would understand that the given parameter, property, or condition is met with a small degree of variance, such as, for example, within acceptable manufacturing tolerances. By way of example, depending on the particular parameter, property, or condition that is substantially met, the parameter, property, or condition may be at least 90% met, at least 95% met, or even at least 99% met.

As used herein, the term "at least substantially circular," with reference to a path to be traversed by a vehicle, includes paths that traverse varying degrees of levelness and completeness of a circle. For example, a perfectly circular path forming a complete circle over perfectly level terrain would be an "at least substantially circular" path. Not all terrain that a vehicle may traverse, however, is perfectly flat. For example, uneven terrain including slopes, hills, dips, trenches, other changes in altitude, or combinations thereof may divert a path traversed by a vehicle from a perfect circular path. Paths that at least substantially encircle a center pivot point over uneven terrain are also described herein as "at least substantially circular." Furthermore, a vehicle may traverse a path only partially around a center pivot point. These paths may also be described as "at least substantially circular." In addition, a path around a center pivot point may deviate, for portions of the path, from perfectly circular (e.g., to go around obstacles such as trees, other vegetation, rocks, fence posts, etc.). These paths may be described herein as "at least substantially circular."

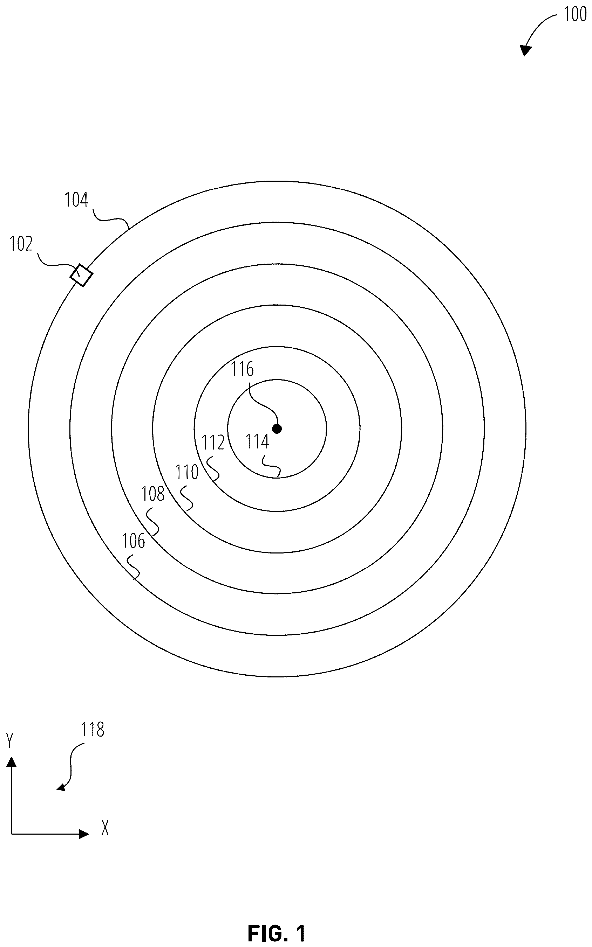

FIG. 1 is a diagram illustrating a circular area 100, a center pivot point 116 (sometimes referred to herein more simply as "pivot 116") of the circle area 100, and a plurality of paths of a vehicle 102 around the pivot 116, according to some embodiments. For ease of illustration and/or description, and for the sake of clarity, FIG. 1 is illustrated in a 2D plane 118 (e.g., defined by x- and y-axes). However, the systems and/or methods described herein may refer to, or be utilized in, a 3D space (e.g., defined by x-, y-, and z-axes). For example, the circular area 100 of FIG. 1 may approximate and/or represent a 3D space to be traversed by a vehicle.

In some embodiments, the vehicle 102 may traverse a path 104, a path 106, a path 108, a path 110, a path 112, a path 114, and/or other paths of (e.g., inside) the circular area 100, where the area 100 has center pivot point 116.

As used herein, the term "vehicle" refers to any machine that may be used to propel a human and/or equipment along a path. For example, a "vehicle" (e.g., vehicle 102) may include an agricultural machine that may be used during an agricultural process (e.g., planting, spraying, harvesting, cutting, baling, spreading, etc.). Examples of agricultural machines may include tractors, spreaders, planters, air carts, air seeders, harvesters, combines, balers, etc. Additionally, or alternatively, vehicles (e.g., vehicle 102) may also include machines that tow agricultural machines, automobiles, all-terrain vehicles (ATVs), watercraft, aircraft, or other vehicles. Additionally, or alternatively, vehicles (e.g., the vehicle 102) may be used in a residential and/or industrial area, such as street sweepers, snowplows, trucks or tractors fitted with blades for clearing snow from roads, snow blowers, vacuum trucks, bulldozers, loaders, excavators, and/or the like. Additionally, or alternatively, "vehicles" (e.g., the vehicle 102) may be used in a body of water, for example, in the fishing industry or the aquaculture industry, such as a trawler, a longline boat, a purse seiner, a gillnetter, a drift boat, a trolling vessel, or another vehicle.

In some embodiments, the paths (e.g., paths 104-114) may be, or refer to, way lines (e.g., in the agriculture industry), navigation routes (e.g., in the fishing or aquaculture industries), flight routes (e.g., of aircrafts), and/or other terms, depending on the industry.

It will be apparent to those of ordinary skill in the art that in many instances, a physical path (e.g., a road, a trail, etc.) traveled by the vehicle 102 may include a finite, non-zero width (e.g., equal to or greater than a width of the vehicle 102). While FIG. 1 illustrates the paths 104-114 as lines, which do not themselves have width, the use of lines is representative of a path through space traveled by the vehicle 102 (e.g., by a center of gravity of the vehicle 102). These lines are not intended to suggest that physical paths (e.g., roads, trails, etc.) corresponding to the paths 104-114 do not have widths. For example, the path 104 of FIG. 1 is illustrated as falling in the middle of the width of the vehicle 102. However, the width of a physical path covered by the vehicle as it traverses along the path 104 may be equal to or greater than the width of the vehicle 102 throughout the perimeter of the circle created by the path 104. The same can be said for the other illustrated paths 106-114 of FIG. 1.

A vehicle navigation system may be utilized by a vehicle (e.g., vehicle 102) to traverse (e.g., drive) along paths 104-114 around a pivot (e.g., pivot 116) of a substantially circle area (e.g., area 100), where the pivot is the center of the circle area. For example, in the United States, the circle area may be referred to as a "crop circle." Crop circles are often the result of centralized pivot irrigation systems used in agriculture. These irrigation systems may rotate around a central point (e.g., a pivot, a centralized pivot, pivot 116 of FIG. 1), where the irrigation systems may be configured to distribute water in a circular pattern, thus creating circular patterns in fields. The substantially evenly distributed irrigation may minimize water usage or power consumption of a pump(s) used to pump the water compared to other methods and/or systems.

Unfortunately, in some embodiments, the area (e.g., area 100) may not be flat, and the area may include physical and/or topographic features, such as ridges, slopes, indentations, depressions, bumps, dense and/or large vegetation, and/or other physical features. Some of these physical features may be permanent, semi-permanent, or temporary. For example, a flooded or saturated soil may turn into indentations as the vehicle (e.g., vehicle 102) traverses one or more paths inside the area 100.

Some systems and/or methods, such as the ones disclosed in U.S. Patent No. 11,125,568, filed October 23, 20217, the entire disclosure of which is hereby incorporated herein by reference, accommodate for such physical features when calculating and/or determining the paths and/or the pivot of a circular area by, for example, compensating for the height (e.g., in a z-axis, not illustrated in FIG. 1) as a vehicle traverses through these physical and/or topographic features. All references cited herein are incorporated herein in their entireties. If there is a conflict between definitions herein and in an incorporated reference, the definition herein shall control.

The systems and/or methods may depend on the user (e.g., driver, operator, farmer, etc.) to properly utilize and/or implement the systems and/or methods disclosed in U.S.

Patent No. 11,125,568. Unfortunately, sometimes a user (e.g., driver, farmer, etc.) may struggle to drive the vehicle (e.g., vehicle 102) along a curved or circular path (e.g., path 104) by constantly turning (e.g., clockwise or counter clockwise) the steering wheel of the vehicle to keep true along the path as the vehicle traverses ridges, slopes, indentations, depressions, bumps, and/or other physical features (not illustrated in FIG. 1) of the area. The user, for example, may overcorrect the driving trajectory of the vehicle by turning the steering wheel more than necessary. Consequently, the vehicle may deviate from a substantially circular path more than is desirable, which may lead to improper identification of the center pivot point of the path.

The vehicle navigation system described herein, however, aids the user and/or the vehicle 102 (e.g., in embodiments where autonomous driving is employed) to navigate along a path (e.g., paths 104-114), and the vehicle navigation system may determine the location and/or keep track of the pivot 116 of the circular area 100. In some embodiments, the vehicle navigation system may aid the user and/or the vehicle 102 to navigate along the paths 104-114 by accurately mapping the paths with respect to the pivot 116 of the circle area 100. To do so, in some embodiments, the vehicle navigation system identifies and tracks the pivot 116 accurately, precisely, and/or consistently even when the vehicle 102 traverses these physical and/or topographic features of the area 100.

In some embodiments, the vehicle navigation system described herein may not calculate the location of the pivot 116 before determining a path (e.g., path 104). Instead, the user may start driving the vehicle 102, then engage the vehicle navigation system. Additionally, or alternatively, the user may not keep true along the path by only using the steering wheel. The user may, for example, push or engage buttons (e.g., nudge buttons) embedded in or one a joystick of the vehicle 102 to nudge the direction of the vehicle, as the vehicle navigation system guides the user to increase or decrease the curvature of the path during driving. Consequently, the vehicle (e.g., vehicle 102) drives a substantially smoother, more accurate, and/or more precise curvature along the path (e.g., path 104) compared to the user simply using the steering wheel of the vehicle while driving. In other words, nudge buttons may provide a steering capability that is finer (e.g., a smaller alteration to the curvature of a trajectory of the vehicle 102) than is generally achievable using a steering wheel. By aiding the user and/or the vehicle 102 to drive this smooth, accurate, and/or precise path (e.g., a closer approximation to the path 104), the vehicle navigation system may increase the accuracy and/or precision when determining the pivot 116 of the area 100. In some embodiments, the vehicle navigation system may be utilized by the user to remove some user error while driving (e.g., steering error, driving error).

In some embodiments, the vehicle navigation system disclosed herein may be particularly beneficial in instances where the vehicle 102 is a windrower or other vehicle that has relatively unstable steering. Compared to the steering of some other vehicles (e.g., tractors), the steering of a windrower may be less stable due to the location of the steering wheel, and due to a hydraulic system of wheels generally implemented into windrowers. It may be relatively difficult for vehicle navigation systems in vehicles having relatively unstable steering to accurately ascertain a center pivot point of a path due to relatively frequent and large deviations from a circular path that may occur due to the unstable steering. While systems and/or methods disclosed herein may be beneficial when operating vehicles having unstable steering (e.g., windrowers), systems and/or methods disclosed herein may also be beneficial for operating vehicles having more stable steering such as tractors and/or other farming or non-farming vehicles.

In some embodiments, the vehicle navigation system may instruct the driver to nudge (e.g., using buttons on a joystick) the direction of the vehicle 102 to the left or the right as the driver drives the vehicle 102 along the path 104 (or along any of the other paths 106-114). By so doing, the driver may rely less on the steering wheel to keep the vehicle 102 along the path 104 as the vehicle navigation system maps and/or determines the proper shape and/or location of the path (e.g., path 104) and/or calculates the pivot 116 of the area 100.

In some embodiments, the vehicle 102 may be equipped with a camera that may be integrated with other equipment of the vehicle 102 (e.g., with an infotainment system of the vehicle 102). The driver may engage the vehicle navigation system to generate a preliminary arc to estimate a curvature of the path 104 before the driver starts driving the vehicle 102. The preliminary arc may appear on an electronic display (e.g., an electronic display of a vehicle infotainment system) overlayed onto a digital image of a forward view from the vehicle. The driver may adjust a curvature of the preliminary arc to estimate a curvature for an at least substantially circular path (e.g., the path 104 of FIG. 1). Once the preliminary arc matches the driver's expectation for the curvature of the path, the driver may lock in the preliminary arc. The vehicle navigation system may determine an estimate of the path (e.g., the path 104) based on the preliminary arc. The driver may start driving the vehicle 102 along the path 104. An estimated trajectory line of the vehicle 102 and the estimated path (e.g., path 104 of FIG. 1), or apportion thereof, may be overlayed on the digital image displayed on the display of the vehicle infotainment system. By viewing the paths on the display, the driver can make directional adjustments. For example, as the trajectory line strays from the estimated path, the driver may make steering adjustments to return to the estimated path. Additionally, or alternatively, the vehicle infotainment system and/or the vehicle may include sensors that can measure and compare the smoothness, accuracy, and/or precision of the driving compared to the path 104. Additionally, or alternatively, the vehicle infotainment system may include a threshold(s) of accuracy, precision, and/or smoothness of the driven path compared to the path 104. The threshold(s) (e.g., one, two, three, four, ten, or twenty centimeters) may inform the driver whether they are driving with smoothness, accuracy, and/or precision along the curvature of the path (e.g., path 104). The driver may use buttons (e.g., nudge buttons) on a joystick to increase the smoothness, accuracy, and/or precision of driving along the curvature of the path (e.g., path 104). By so doing, user error (e.g., driver error, an error due to oversteering and/or understeering a steering wheel) can be lowered or minimized, as the vehicle navigation system calculates and/or determines the location of the pivot 116 of the area 100. Additionally, or alternatively, the vehicle 102, the vehicle navigation system, and/or a vehicle infotainment system of the vehicle 102 may display and/or sound alarms when the driver deviates from the path (e.g., path 104 of FIG. 1).

In some embodiments, the driver may initially start driving a portion of the path 104 to define a preliminary arc that may be used to generate the rest of the path 104 to be traveled by the vehicle 102. Then, the driver may engage the vehicle navigation system to guide the driver to drive the rest of the path 104, where the vehicle navigation system locks the curvature of the path 104 as the driver drives the vehicle 102 through the rest of the path 104. In some embodiments, the vehicle navigation system may first lock in a preliminary arc to define the curvature of the path 104, then the driver may start driving with an already engaged vehicle navigation system. Using either engagement method, the vehicle navigation system may calculate and/or determine the location of the pivot 116 of the area 100 based on data extrapolated from the curvature of the path 104 or a portion of the path 104. In some embodiments, the portion of the path 104 corresponding to the preliminary arc may be 5%, 10%, 20%, or more of the entire length (e.g., circumference of a circle defined by the path) of the path 104. Therefore, the vehicle navigation system need not first establish the entire length of the path 104 (e.g., the entire circumference of the circle defined by the path 104) in order to accurately and/or precisely determine the location of the pivot 116 of the area 100. Nevertheless, in some embodiments, the vehicle navigation system may continuously or periodically (e.g., every minute, every 20 meters, or another time or length period) verify that it is using an accurate location of the pivot 116 of the area 100.

In some embodiments, the vehicle navigation system may eliminate or minimize user error by automatically, autonomously, or semi-autonomously calculating the path (e.g., path 104) and/or the pivot 116 of the area 100. In some embodiments, the vehicle navigation system may not use a global navigation satellite system (GNSS) to determine locations of the path and/or pivot of the area. Therefore, in some embodiments, the vehicle navigation system may be configured as a non-GNSS vehicle navigation system. Instead, the vehicle navigation system may rely on sensors, such as Lidar (e.g., a light detection and ranging (LiDAR) system), image sensors, proximity sensors, humidity sensors, other sensors, or a combination thereof to determine the location of the path and/or the pivot of the circular area (e.g., area 100). For example, the area 100 may have indentations (e.g., tire treads) on the ground and/or lines (e.g., interruptions) in the vegetation created by the wheels of an irrigation system or by a previous use of the same vehicle or another vehicle. These sensors can detect a path created by the indentations. The vehicle navigation system can then lock a path with the same curvature as the indentations and calculate the location of the pivot 116 of the area 100. To do so, the vehicle navigation system may utilize a myriad of image detection methods by using pattern recognition, color recognition (e.g., green, light green, dark green, brown, light brown, dark brown), a trained image-based machine learning model, edge detection, and/or so forth based on the sensor data.

In some embodiments, the vehicle navigation system may be configured such that the vehicle 102 performs assisted driving. Additionally, or alternatively, the vehicle navigation system may be configured such that the vehicle 102 may perform autonomous driving, for example, after the vehicle navigation system locks the path (e.g., path 104) and/or determines the location of the pivot 116 of the area 100. Nevertheless, the vehicle infotainment system may periodically engage the driver such that the driver is paying attention, while the vehicle 102 is driving along the path (e.g., path 104). This may be done to conform to legal requirements, to increase safety, to increase the quality of the work, or for other reasons. For example, the vehicle infotainment system of the vehicle 102 may state on a display screen of the vehicle infotainment system phrases, such as: "within five seconds press a tab on the display screen to continue driving;" "check your surroundings;" "motion detected inside the area and/or along the path;" "farming process "P" has completed;" "press a tab to start farming process "Q";" and/or other statements of similar effect.

In some embodiments, a "nudge" may refer to a substantially small incremental steering of the vehicle 102, such as one degree, two degrees, or another substantially small incremental steering. In some embodiments, the driver may perform the nudging of the vehicle 102 using nudge buttons located on a joystick, for example, inside a cabin or cockpit of the vehicle 102. Additionally, or alternatively, the driver may perform the nudging of the vehicle 102 by pressing one or more tabs on a display of the vehicle infotainment system of the vehicle 102. Additionally, or alternatively, the vehicle 102 and/or the vehicle navigation system may utilize voice-activated and/or voice-assisted technology, and the driver may state phrases, such as: "steer one degree to the left;" "steer one degree to the right," or other voice commands using the voice-activated or voice-assisted technology. Since the vehicle 102 may be substantially loud when operating, the driver may use headphones equipped with a microphone to relay these voice commands to the vehicle infotainment system and/or the vehicle navigation system of the vehicle 102.

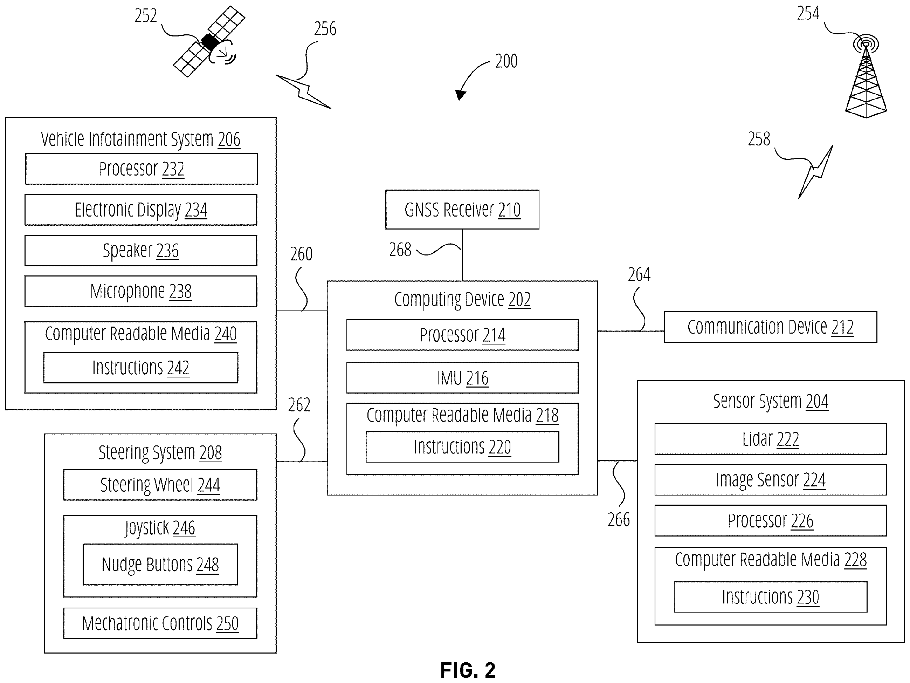

FIG. 2 is a block diagram illustrating a vehicle navigation system 200, according to some embodiments. FIG. 2 is illustrated and/or described in the context of FIG. 1. For example, the vehicle 102 of FIG. 1 may utilize the vehicle navigation system 200 of FIG. 2.

In some embodiments, the vehicle navigation system 200 may include a computing device 202, a sensor system 204, a vehicle infotainment system 206, a steering system 208, a GNSS receiver 210, and/or a communication device 212. In some embodiments, the vehicle navigation system 200 may include fewer, additional, and/or different components than what are shown in FIG. 2.

In some embodiments, the various illustrated and/or described components of the vehicle navigation system 200, such as the computing device 202, the sensor system 204, the vehicle infotainment system 206, the steering system 208, the GNSS receiver 210, and/or the communication device 212 may be discrete components of the vehicle navigation system 200, may be partially combined, or may be wholly combined into one device or system (e.g., vehicle navigation system 200).

In some embodiments, the computing device 202 may include a processor 214, an IMU 216, a computer readable media 218, and/or instructions 220 that me be stored on the computer readable media 218. In some embodiments, the computing device 202 may include fewer, additional, and/or different components than what are shown in FIG. 2.

In some embodiments, the sensor system 204 may include a Lidar 222, an image sensor 224, other sensors (not explicitly illustrated in FIG. 2), a processor 226, a computer readable media 228, and/or instructions 230 that may be stored on the computer readable media 228. In some embodiments, the sensor system 204 may include fewer, additional, and/or different components than what are shown in FIG. 2.

In some embodiments, the vehicle infotainment system 206 may include a processor 232, an electronic display 234, a speaker 236, a microphone 238, a computer readable media 240, and/or instructions 242 that may be stored on the computer readable media 240. In some embodiments, the vehicle infotainment system 206 may include fewer, additional, and/or different components than what are shown in FIG. 2.

In some embodiments, the steering system 208 may include a steering wheel 244, a joystick 246, nudge buttons 248 embedded in or on the joystick 246, and/or mechatronic controls 250. In some embodiments, the steering system 208 may include fewer, additional, and/or different components than what are shown in FIG. 2.

In some embodiments, the mechatronic controls 250 of the steering system 208 may differ depending on the type of the vehicle or a system thereof. For example, mechatronic controls of a windrower may include mechatronic controls of the driving system of the windrower, such as transmission controls that may control a variable transmission(s) for precise speed and/or torque adjustments; electronic sensors and/or actuators that may be implemented for real-time monitoring of driveline components; and/or other mechatronic controls. As another example, mechatronic controls of a windrower may include mechatronic controls of the steering system of the windrower, such as a hydraulic steering control that may employ electro-hydraulic systems to enable adaptive steering responses based on speed of the vehicle 102 of FIG. 1 and/or the terrain along the path (e.g., path 104 of FIG. 1).

In some embodiments, the GNSS receiver 210 may be configured to receive wireless communication 256 from a satellite 252 or a constellation of satellites.

In some embodiments, the communication device 212 may communicate with a base station 254 using a wireless communication 258, the satellite 252 using the wireless communication 256, or another communication node (not illustrated in FIG. 2) to receive correction signals to be used by the vehicle navigation system 200. For example, the communication device 212 may be or include a mobile phone, a satellite phone, a radio device, a Wi-Fi module or router, a dedicated short range communications (DSRC) device, another type of a communication device, or combinations thereof.

In some embodiments, the vehicle navigation system 200 may determine the path (e.g., any of the paths 104-114 of FIG. 1) and/or the pivot (e.g., pivot point 116 of FIG. 1) by using data received by the GNSS receiver 210, the communication device 212, the sensor system 204, or a combination thereof.

Although not explicitly illustrated in FIG. 2, each of the computing device 202, the sensor system 204, the vehicle infotainment system 206, the steering system 208, the GNSS receiver 210, the communication device 212, the satellite 252, and/or the base station 254 may include one or more communication interfaces to communicate wired and/or wireless communications using a variety of communication protocols and/or standards. Examples of such protocols and standards include: a 3rd Generation Partnership Project (3GPP) Long-Term Evolution (LTE) standard, such as a 4th Generation (4G) or a 5th Generation (5G) cellular standard; an Institute of Electrical and Electronics (IEEE) 602.11 standard, such as IEEE 602.11g, ac, ax, ad, aj, or ay (e.g., Wi-Fi 6^{®} or WiGig^{®}); an IEEE 602.16 standard (e.g., WiMAX^{®}); a Bluetooth Classic^{®} standard; a Bluetooth Low Energy^{®} or BLE^{®} standard; an IEEE 602.15.4 standard (e.g., Thread^{®} or ZigBee^{®}); other protocols and/or standards that may be established and/or maintained by various governmental, industry, and/or academia consortiums, organizations, and/or agencies; and so forth.

In some embodiments, the computing device 202, the sensor system 204, the vehicle infotainment system 206, the steering system 208, the GNSS receiver 210, the communication device 212, the satellite 252, and/or the base station 254 may communicate using a communication network. The communication network may be or include a cellular network; the Internet; a wide area network (WAN); a local area network (LAN); a wireless LAN (WLAN); a wireless personal-area-network (WPAN); a mesh network; a wireless wide area network (WWAN); a peer-to-peer (P2P) network; a GNSS (e.g., Global Positioning System (GPS), Galileo, Quasi-Zenith Satellite System (QZSS), BeiDou, GLObal NAvigation Satellite System (GLONASS), Indian Regional Navigation Satellite System (IRNSS), etc.); another communication network; or a combination thereof.

FIG. 2 illustrates various communication links, such as a wireless communication 256 link, for example, between the GNSS receiver 210 and the satellite 252; a wireless communication 258 link, for example, between the communication device 212 and the base station 254; a wired or wireless communication 260 link between the vehicle infotainment system 206 and the computing device 202; a wired or wireless communication 262 link between the steering system 208 and the computing device 202; a wired or wireless communication 264 link between the communication device 212 and the computing device 202; a wired or wireless communication 266 link between the sensor system 204 and the computing device 202; and/or a wired or wireless communication 268 link between the GNSS receiver 210 and the computing device 202.

In addition to, or alternatively of, the communications illustrated in FIG. 2, the vehicle navigation system 200 or another entity (e.g., a server, not illustrated in FIG. 2) may facilitate other unidirectional, bidirectional, wired, wireless, photonic, acoustic (e.g., underwater acoustic communication, if the vehicle is used in a body of water), direct, and/or indirect communications utilizing one or more communication protocols and/or standards. For example, other communication links may exist between the various components of the computing device 202, such as between the processor 214, the IMU 216, and/or the computer readable media 218. As another example, other communication links may exist between the various components of the sensor system 204, such as between the Lidar 222, the image sensor 224, the processor 226, and/or the computer readable media 228. As another example, other communication links may exist between the various components of the vehicle infotainment system 206, such as between the processor 232, the electronic display 234, the speaker 236, the microphone 238, and/or the computer readable media 240. As another example, other communication links may exist between the various components of the steering system 208, such as between the steering wheel 244, the joystick 246, the nudge buttons 248, and/or the mechatronic controls 250. As another example, other communication links may exist between the various components (not illustrated in FIG. 2) of the GNSS receiver 210. As yet another example, other communication links may exist between the various components (not illustrated in FIG. 2) of the communication device 212. Therefore, for ease of illustration, FIG. 2 does not necessarily illustrate all communication signals, couplings, and/or links that may be used in various examples.

In some embodiments, each, some, or all of the processor 214, processor 226, processor 232, another processor (that may be not explicitly illustrated in FIG. 2), various illustrative logical blocks, modules, and/or circuits illustrated and/or described in connection with the embodiments disclosed herein may be implemented or performed with: a general purpose processor; a special purpose processor; a digital signal processor (DSP); an Integrated Circuit (IC); an Application Specific Integrated Circuit (ASIC); a Field Programmable Gate Array (FPGA); or other programmable logic device, discrete gate or transistor logic, and/or discrete hardware components; or any combination thereof are designed to perform the functions described herein. A general-purpose processor (may also be referred to herein as a host processor or simply a host) may be a microprocessor, but in the alternative, the processor may be any conventional processor, controller, microcontroller, or state machine. A processor may also be implemented as a combination of computing devices, such as a combination of a DSP and a microprocessor, a plurality of microprocessors, one or more microprocessors in conjunction with a DSP core, or any other such configuration. A general-purpose computer including a processor is considered a special-purpose computer while the general-purpose computer is configured to execute computing instructions (e.g., software code) related to embodiments of the present disclosure, converting the general-purpose computer into a special-purpose computer.

In some embodiments, the IMU 216 (for clarity, "IMU" refers to "inertial measurement unit") of the computing device 202 may include and/or utilize accelerometers, gyroscopes, magnetometers, or a combination thereof. The IMU 216 may be configured to measure and/or determine a force of movement of the vehicle 102 of FIG. 1 (e.g., jerking motions as the vehicle 102 drives through indentations, etc.); an angular rate of the vehicle 102; an orientation of the vehicle 102 (e.g., in the x, y, and/or z direction); a motion of the vehicle 102; and/or other measurements.

In some embodiments, the computer readable media 218 of the computing device 202, the computer readable media 228 of the sensor system 204, the computer readable media 240 of the vehicle infotainment system 206, and/or the additional computer readable media may be and/or include any data storage media, such as volatile memory and/or non-volatile memory. Examples of volatile memory may include a random-access memory (RAM), such as a static RAM (SRAM), a dynamic RAM (DRAM), or a combination thereof. Examples of non-volatile memory may include a read-only memory (ROM), a flash memory (e.g., NAND flash memory, NOR flash memory), a magnetic storage medium, an optical medium, a ferroelectric RAM (FeRAM), a resistive RAM (RRAM), and so forth.

In some embodiments, the instructions 220 may be included in, permanently or temporarily saved on, and/or accessed by the computer readable media 218 of the computing device 202. In some embodiments, the instructions 230 may be included in, permanently or temporarily saved on, and/or accessed by the computer readable media 228 of the sensor system 204. In some embodiments, the instructions 242 may be included in, permanently or temporarily saved on, and/or accessed by the computer readable media 240 of the vehicle infotainment system 206. These instructions my include code, pseudo-code, algorithms, a machine learning model, large language model (LLM), heuristics, other models, software, and/or so forth and may be executable by the processors 214, 226, 232, another processor, or combinations thereof. Additionally, or alternatively, the instructions may be stored on a server (e.g., a cloud server, not illustrated herein). Additionally, or alternatively, some or all of the processing may be performed on the server.

In some embodiments, the instructions 220 may configure the processor 214 and/or the computing device 202 to fuse (e.g., merge, combine) GNSS data (e.g., GNSS location data) received from the GNSS receiver 210 with data measured from the IMU 216. By so doing, the computing device 202 (and/or the components thereof) may be configured to determine the location, orientation, and/or the slope of the vehicle 102 of FIG. 1 in regards to the path (e.g., path 104 of FIG. 1), the circular area (e.g., area 100 of FIG. 1), and/or the pivot (e.g., pivot point 116 of FIG. 1).

In some embodiments, the instructions 220 may include instructions for precision farming. For example, the instructions 220 may configure the processor 214 and/or the computing device 202 to process user interfaces and/or inputs, where the user may utilize the vehicle infotainment system 206 and/or the steering system 208. For example, the instructions 220 may include a speed control of the vehicle; controls of a section of the path and/or area; controls of accessories or attachments of the vehicle; and/or other controls depending on the type of the vehicle. As another example, if the vehicle 102 of FIG. 1 is a combine harvester, the controls may include controls regarding reaping, threshing, winnowing, residue management, etc. As yet another example, if the vehicle 102 is a tractor equipped with one of a plurality (e.g., various) of accessories or attachments used for respective various processes, these controls may include controls regarding plowing, harrowing, planting, fertilizing, spraying, tilling, harvesting, transporting, mowing, baling, etc.

In some embodiments, the instructions 220 may configure the processor 214 of the computing device 202 to process signals received at, or transmitted from, the computing device 202 to the vehicle infotainment system 206, the GNSS receiver 210, the communication device 212, the sensor system 204, and/or the steering system 208. Although not explicitly illustrated in FIG. 2 each, some, or all of the components of the vehicle navigation system 200, such as the computing device 202, the GNSS receiver 210, the communication device 212, the sensor system 204, the steering system 208, and/or the vehicle infotainment system 206 may include a respective communication interface that may be configured to transmit and/or receive the various communication signals utilizing the various communication protocols.

In some embodiments, the instructions 220 may include instructions for motion planning and/or instructions for motion control. For example, the instructions 220 may configure processor 214 and/or the computing device 202 to communicate signals, requests, and/or inputs to and/or from the steering system 208 and/or the vehicle infotainment system 206 of the vehicle navigation system 200.

In some embodiments, the electronic display 234 of the vehicle infotainment system 206 may utilize a variety of display technologies, such as a liquid-crystal display (LCD) technology, a light-emitting diode (LED) backlit LCD technology, a thin-film transistor (TFT) LCD technology, an LED display technology, an organic LED (OLED) display technology, an active-matrix OLED (AMOLED) display technology, a super AMOLED display technology, and so forth.

In some embodiments, the vehicle infotainment system 206 may utilize the speaker 236 of FIG. 2 to communicate information, instructions, and/or alarms to the driver of the vehicle 102 of FIG. 1 regarding navigation, processes being completed using the vehicle 102, and/or other information. Additionally, or alternatively, the information, instructions, and/or alarms may be displayed on the electronic display 234 and/or read and/or sounded aloud on the speaker 236 of the vehicle infotainment system 206.

In some embodiments, the sensor system 204 may include a Lidar 222; one or more image sensors 224; proximity sensors (not illustrated in FIG. 2); humidity sensors (not illustrated in FIG. 2); other sensors (not illustrated in FIG. 2); a processor 226; computer readable media 228; instructions 230 stored and/or accessed by the computer readable media 228, or other components not explicitly illustrated in FIG. 2. In some embodiments, data collected from the Lidar 222, the image sensor 224, and/or other sensors may be used to determine the location of the vehicle 102 of FIG. 1 in respect to the path 104, other paths of FIG. 1, and/or the pivot point 116 of the circular area 100. As described, the area 100 may have indentations (e.g., tire treads) on the ground and/or the vegetation created by the wheels of an irrigation system or by a previous use of the same vehicle or another vehicle. These sensors can detect a path created by the indentations. The vehicle navigation system can then lock a path with the same curvature as the indentations and calculate the location of the pivot point 116 of the area 100. To do so, the vehicle navigation system may utilize a myriad of image detection methods by using pattern recognition, color recognition (e.g., green, light green, dark green, brown, light brown, dark brown), a trained image-based machine learning model, edge detection, and/or so forth based on the sensor data.

In some embodiments, the processor 214 may be a guidance controller that receives and processes user inputs, where the user may utilize the steering system 208 and/or the vehicle infotainment system 206. For example, the user may utilize the steering wheel 244, the joystick 246, and/or the nudge buttons 248 of the joystick 246 of FIG. 2 to steer or guide the vehicle 102 of FIG. 1. As another example, the user may utilize the vehicle infotainment system 206 to steer or guide the vehicle 102 of FIG. 1 using tabs on the electronic display 234 or buttons (e.g., nudge buttons, not illustrated in the vehicle infotainment system 206) of FIG. 2.

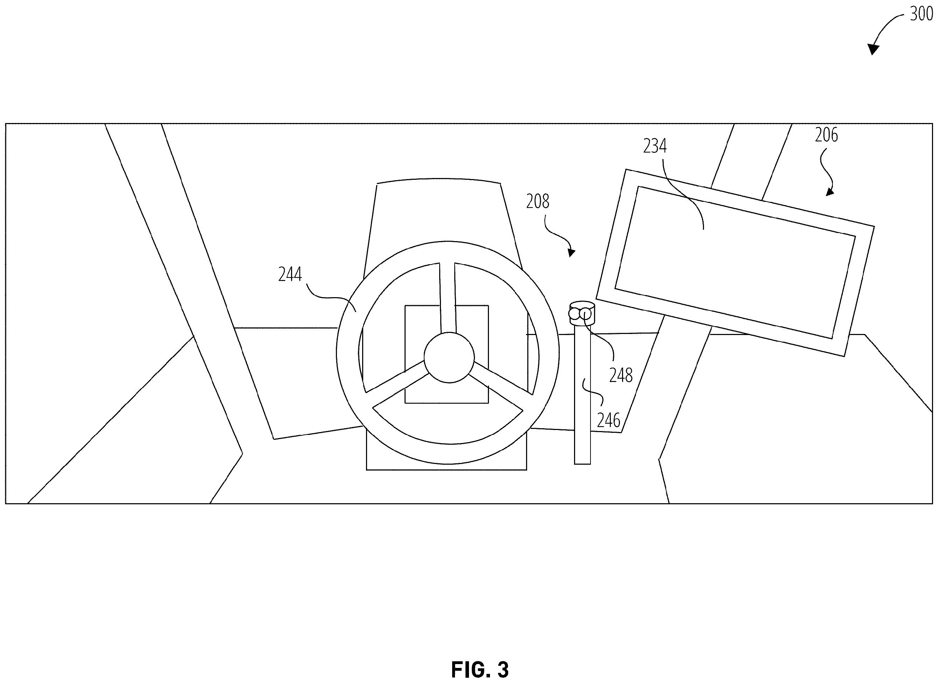

FIG. 3 is a diagram illustrating an inside view of a cockpit 300 of a vehicle, according to some embodiments. FIG. 3 is illustrated and/or described in the context of FIG. 1 and/or FIG. 2. For example, the vehicle 102 of FIG. 1 may include the cockpit 300 of FIG. 3. As another example, the cockpit 300 of FIG. 3 may include the vehicle infotainment system 206 described and/or illustrated in FIG. 2, where the vehicle infotainment system 206 may includes the electronic display 234 of FIG. 2 and/or FIG. 3. As yet another example, the cockpit 300 of FIG. 3 may include the steering system 208 described and/or illustrated in FIG. 2, where the steering system 208 may include the steering wheel 244, the joystick 246, and/or the nudge buttons 248 embedded in or on the joystick 246 of FIG. 2 and/ FIG. 3.

As is illustrated in FIG. 3, in some embodiments, the cockpit 300 may include a steering system 208, a steering wheel 244 of the steering system 208, a joystick 246 of the steering system 208, nudge buttons 248 embedded in or on the joystick 246, a vehicle infotainment system 206, and/or an electronic display 234 of the vehicle infotainment system 206. In some embodiments, the cockpit 300 may include fewer, additional, and/or different components than what are shown in FIG. 3.

In some embodiments, the driver may utilize the steering wheel 244, the joystick 246, the nudge buttons 248, and/or the vehicle infotainment system 206 to steer the vehicle (e.g., vehicle 102 of FIG. 1).

In some embodiments, the driver may utilize the steering wheel 244 when keeping true to a particular narrow path may not be particularly important. For example, assume the driver is driving a farming equipment (e.g., a vehicle 102) from their house or village to a circular area of farming (e.g., a crop circle, area 100 of FIG. 1). During such drive, it may not be helpful for the driver to use the joystick 246, the nudge buttons 248, or the vehicle infotainment system 206 to drive their vehicle in an accurate and/or precise manor. Instead, the driver can drive their vehicle 102 of FIG. 1 using the steering wheel 244 of FIG. 2 and/or FIG. 3, and the driver may meet legal requirements that meet or exceed laws or regulations of the local and/or state jurisdiction (e.g., traffic laws or regulations).

However, in some embodiments, for example, should the driver want to use the vehicle navigation system 200 for guidance to traverse a particular path (e.g., path 104 of FIG. 1), the driver may utilize the nudge buttons 248 embedded in or on the joystick 246 to steer the vehicle (e.g., vehicle 102 of FIG. 1). The nudge buttons 248 may be configured and/or utilized for incremental steering of the vehicle 102, such as one degree, two degrees, or another substantially small incremental steering. These nudge buttons 248 are particularly useful when the driver utilizes the vehicle navigation system 200 to traverse the vehicle 102 of FIG. 1 through a narrow, accurate, and/or precise circular path (e.g., path 104 of FIG. 1) having a center pivot point 116 of the path and/or a circular area (e.g., area 100 of FIG. 1).

Additionally, or alternatively, although not illustrate as such in FIG. 3, the driver may use nudge tabs that may be displayed on the electronic display 234 of the vehicle infotainment system 206 of FIG. 2 and/or FIG. 3. For example, the electronic display 234 may be a touch-sensitive display, and the vehicle infotainment system 206 may communicate steering inputs of the driver to the computing device 202, the steering system 208, and/or the vehicle navigation system 200 of FIG. 2.

Additionally, or alternatively, the driver may state into a microphone 238 of the vehicle infotainment system 206 of FIG. 2 "steer one degree to the left;" "steer one degree to the right," or other voice commands using the voice-activated or voice-assisted technology that may be utilized by the vehicle infotainment system 206 of FIG. 2 and/or FIG. 3 and/or the vehicle navigation system 200 of FIG. 2.

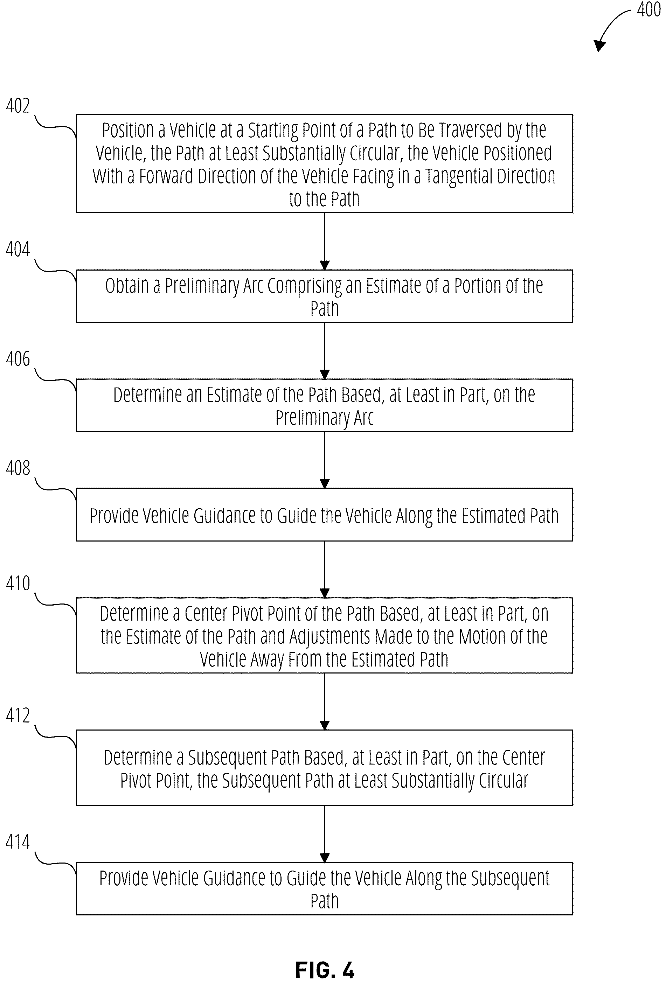

FIG. 4 is a flowchart illustrating a method 400 of operating a vehicle navigation system (e.g., the vehicle navigation system 200 of FIG. 2), according to some embodiments. FIG. 4 is illustrated and/or described in the context of FIG. 1, FIG. 2, and/or FIG. 3.

In some embodiments, the operations of the method 400 do not necessarily need to be executed in any specific order, or even sequentially, nor need the steps be executed only once, unless otherwise specified. In some embodiments, the method 400 may be utilized by using one, more than one, and/or all the operations that are illustrated in FIG. 4. Therefore, the method 400 does not necessarily include a minimum, an optimal, or a maximum number of operations, steps, stages, and/or blocks that are needed to implement the systems, methods, and/or techniques described herein.

In some embodiments, the method 400 may be performed by the vehicle navigation system 200 of FIG. 2, where the vehicle navigation system 200 may include and/or utilize a computing device 202, a sensor system 204, a vehicle infotainment system 206, a steering system 208, a GNSS receiver 210, a communication device 212, a combination thereof, and/or components thereof of FIG. 2.

In some embodiments, in operation 402, the method 400 may include positioning a vehicle (e.g., vehicle 102 of FIG. 1) at a starting point of a path (e.g., path 104 of FIG. 1) to be traversed by the vehicle. In some embodiments, the path may be at least substantially circular, for example, as is illustrated by path 104 in FIG. 1. The vehicle may be positioned with a forward direction of the vehicle facing in a tangential direction to the path (e.g., path 104 of FIG. 1). In some embodiments, the vehicle navigation system 200 of FIG. 2 may be used to position the vehicle at the starting point of the path.

In some embodiments, in operation 404, the method 400 may include obtaining a preliminary arc, where the preliminary arc may include an estimate of a portion of the path. For example, in some embodiments, the portion of the path may be 5%, 10%, 20%, or more of the entire length (e.g., circumference of the circle defined by the path) of the path (e.g., path 104 of FIG. 1). In some embodiments, obtaining the preliminary arc may include determining the preliminary arc based on tracked positions of the vehicle as it is driven over a portion of the path. In some embodiments, obtaining the preliminary arc includes overlaying a preliminary arc onto a digital image estimating a view from the vehicle, and enabling an operator of the vehicle to modify a curvature of the preliminary arc. In some embodiments, obtaining the preliminary arc includes determining the preliminary arc based on an estimate of the path determined from processing a digital image to detect the path (e.g., based on tire treads, transitions in vegetation color, etc.). As used herein, the term "digital image" is intended to refer broadly to two-dimensional images (e.g., such as digital images captured by a camera) and to three-dimensional point cloud data captured by LiDAR systems (e.g., the sensor system 204 of FIG. 2).

In some embodiments, in operation 406, the method 400 may include determining an estimate of the path based, at least in part, on the preliminary arc. In embodiments where operation 404 (obtaining a preliminary arc) is performed by tracking positions of the vehicle 102 as it is driven over a portion of the path, after the vehicle 102 traverses the portion of the path (e.g., corresponding to the preliminary arc), the operation 406 (determining an estimate of the path) may include determining an estimate of the entire length of the path (e.g., path 104 of FIG. 1) based on the preliminary arc already traversed by the vehicle 102 of FIG. 1. In embodiments where the preliminary arc is determined before traversing the portion of the path 104 corresponding to the preliminary arc, operation 406 (determining an estimate of the path) may include determining the entire path 104.

In some embodiments, in operation 408, the method 400 may include providing vehicle guidance to guide the vehicle along the estimated path. For example, in some embodiments, the vehicle navigation system 200 of FIG. 2 may guide or aid a driver to drive the vehicle 102 of FIG. 1. Additionally, or alternatively, the trajectory of the vehicle 102, the preliminary arc, a portion of the path, and/or the entire path may be displayed on the electronic display 234 of the vehicle infotainment system 206 of FIG. 2. For example, the trajectory of the vehicle 102, the preliminary arc, a portion of the path, and/or the entire path (e.g., path 104 of FIG. 1) may be overlaid and presented using a graphical user interface (GUI) on the electronic display 234 of the vehicle infotainment system 206 of FIG. 2. Additionally, or alternatively, the preliminary arc may be used to estimate a forward trajectory of the vehicle. Additionally, or alternatively, the driver may use nudge buttons (e.g., nudge buttons 248 of FIG. 2 and/or FIG. 3) to steer the vehicle 102 of FIG. 1 to traverse the path. Additionally, or alternatively, in operation 408, the method 400 may include adjusting a curvature of the preliminary arc based, at least in part, on inputs received from a user. Additionally, or alternatively, in the operation 408, the method 400 may include driving the vehicle 102 of FIG. 1 automatically, autonomously, or semi-autonomously along a path (e.g., path 104) inside a circular area (e.g., area 100 of FIG. 1). In such a scenario, the driver may pay attention to driving of the vehicle to safely traverse the path and/or complete a process. In some embodiments, the driver may override the automatic, autonomous, or semi-autonomous driving of the vehicle 102 of FIG. 1.

In some embodiments, in operation 410, the method 400 may include determining a center pivot of the path based, at least in part, on the estimate of the path and adjustments made to the motion of the vehicle away from the estimated path. For example, as the vehicle 102 traverses the path 104 of FIG. 1 or a portion thereof, in operation 410, the method 400 may include determining the pivot point 116 of the circular area 100 of FIG. 1. In some embodiments, determining the center pivot of the path may include fitting the estimate of the path to an equation of a circle and identifying the center of the circle based on the equation.

In some embodiments, in operation 412, the method 400 may include determining a subsequent path based, at least in part, on the center pivot point, the subsequent path at least substantially circular. For example, after the vehicle 102 traverses the path 104 of FIG. 1, the method 400 may include determining other paths inside the circular area 100 of FIG. 1, such as the path 106, the path 108, the path 110, the path 112, the path 114, or other paths that are not explicitly illustrated in FIG. 1. Each of these paths may be co-centric circular paths with a same center pivot point 116 of FIG. 1. Additionally, or alternatively, in operation 412, the method 400 may include determining a total count of paths needed to traverse each portion inside the circular area 100. Additionally, or alternatively, in operation 412, the method 400 may include determining a time to traverse each portion inside the circular area 100. Additionally, or alternatively, in operation 412, the method 400 may include determining the amount of fuel or stored energy needed for the vehicle 102 to traverse one, some, or all the paths inside the area 100 of FIG. 1.

In some embodiments, in operation 414, the method 400 may provide vehicle guidance to guide the vehicle along the subsequent path. The vehicle guidance in operation 414 of the method 400 may be substantially similar or the same to the vehicle guidance in operation 408 of the method 400 of FIG. 4 and/or other vehicle guidance(s) described in regard to the descriptions in FIG. 1, FIG. 2, and/or FIG. 3.

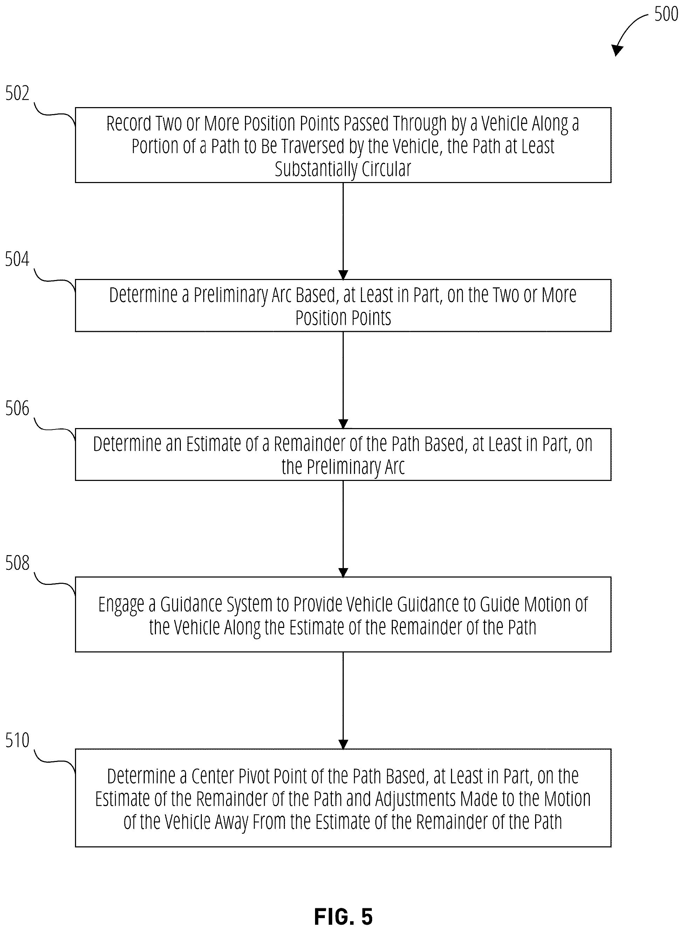

FIG. 5 is a flowchart illustrating a method 500 of operating a navigation system involving determining a preliminary arc based on points passed through by a vehicle, according to some embodiments. FIG. 5 is illustrated and/or described in the context of FIG. 1, FIG. 2, and/or FIG. 3. The method 500 may be an example of the method 400 of FIG. 4.

In some embodiments, the operations of the method 500 do not necessarily need to be executed in any specific order, or even sequentially, nor need the steps be executed only once, unless otherwise specified. In some embodiments, the method 500 may be utilized by using one, more than one, and/or all the operations that are illustrated in FIG. 5. Therefore, the method 500 does not necessarily include a minimum, an optimal, or a maximum number of operations that are used to implement the systems, methods, and/or techniques described herein.

In some embodiments, the method 500 may be performed by or utilizing the vehicle navigation system 200 of FIG. 2, where the vehicle navigation system 200 may include and/or utilize a computing device 202, a sensor system 204, a vehicle infotainment system 206, a steering system 208, a GNSS receiver 210, a communication device 212, a combination thereof, and/or components thereof of FIG. 2.

In some embodiments, in operation 502, the method 500 may include recording two or more position points passed through by a vehicle along a portion of a path to be traversed by the vehicle, the path at least substantially circular. For example, the driver may initially start driving the vehicle 102 along a path, with a vehicle navigation system (e.g., the vehicle navigation system 200 of FIG. 2) engaged to track position points passed through by the vehicle. The driver may then engage the vehicle navigation system 200 of FIG. 2. Consequently, the vehicle navigation system 200 may utilize the recorded position points.

In some embodiments, in operation 504, the method 500 may include determining a preliminary arc based, at least in part, on the two or more position points. For example, based on the records of the two or more position points passed through the vehicle, the vehicle navigation system 200 of FIG. 2 may lock the curvature of the path as the driver drives the vehicle 102 through the rest of the path (e.g., path 104).

In some embodiments, in operation 506, the method 500 may include determining an estimate of a remainder of the path based, at least in part, on the preliminary arc. For example, based on the curvature of the determined preliminary arc, the vehicle navigation system 200 of FIG. 2 may estimate the whole circular path (e.g., path 104 of FIG. 1). The estimation of the remainder of the path may include the perimeter of a circle defined by the path, the time it takes the vehicle to traverse the whole path, the fuel and/or energy needed to traverse the path, and/or other estimations.

In some embodiments, in operation 508, the method 500 may include engaging a guidance system to provide vehicle guidance to guide motion of the vehicle along the estimate of the remainder of the path. For example, the vehicle navigation system 200 of FIG. 2 may guide the driver to drive the vehicle 102 through the remainder of the path 104 of FIG. 1. Additionally, or alternatively, the driver may use nudge buttons (e.g., nudge buttons 248 of FIG. 2 and/or FIG. 3) to steer the vehicle 102 of FIG. 1 to traverse the path. Additionally, or alternatively, in operation 508, the method 500 may include adjusting a curvature and/or shape of the path based, for example, on inputs received from the driver. Additionally, or alternatively, in the operation 508, the method 500 may include driving the vehicle 102 of FIG. 1 automatically, autonomously, or semi-autonomously along a path (e.g., path 104) inside a circular area (e.g., area 100 of FIG. 1). In such a scenario, the driver may pay attention to the driving of the vehicle to safely traverse the path and/or complete a process. In some embodiments, the driver may override the automatic, autonomous, or semi-autonomous driving of the vehicle 102 of FIG. 1.

In some embodiments, in operation 510, the method 500 may include determining a center pivot point of the path based, at least in part, on the estimate of the remainder of the path and adjustments made to the motion of the vehicle away from the estimate of the remainder of the path. Additionally, or alternatively, in operation 510, the method 500 may include determining the center pivot point of the path by updating the preliminary center pivot point based, at least in part, on the estimate of the remainder of the path and the adjustments made to the motion of the vehicle away from the estimate of the path. Additionally, or alternatively, in operation 510, the method 500 may include determining an estimate of the remainder of the path by, for example, fitting points of the preliminary arc to a mathematical equation defining a circle, and/or extrapolating the estimate of the remainder of the path using the mathematical equation. Such equations may include, for example, equations disclosed in U.S. Patent No. 11,125,568. Additionally, or alternatively, in operation 510, the method 500 may include determining the center pivot point of the path by fitting points traversed by the vehicle along the path to a mathematical equation defining a circle, and/or determining the center pivot to be a center point of the circle.

Additionally, or alternatively, the method 500 may include determining a preliminary center pivot point of the path based, at least in part, on the preliminary arc or the estimate of the remainder of the path.

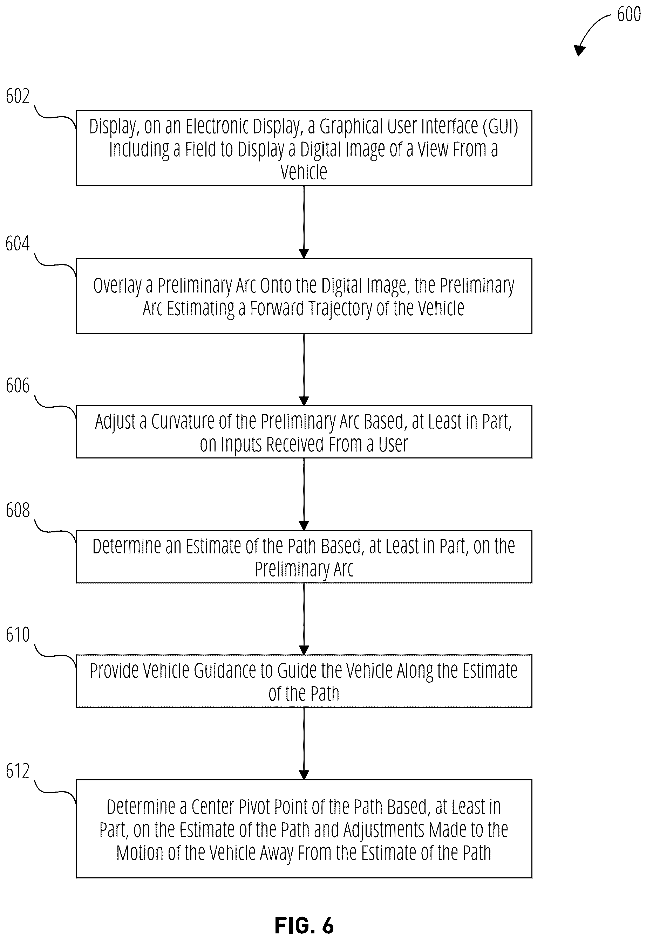

FIG. 6 is a flowchart illustrating a method 600 of operating a navigation system involving overlaying a preliminary arc onto a digital image, according to some embodiments. FIG. 6 is illustrated and/or described in the context of FIG. 1, FIG. 2, and/or FIG. 3. The method 500 may be an example of the method 400 of FIG. 4.

In some embodiments, the operations of the method 600 do not necessarily need to be executed in any specific order, or even sequentially, nor need the operations be executed only once, unless otherwise specified. In some embodiments, the method 600 may be utilized by using one, more than one, and/or all the operations illustrated in FIG. 6. Therefore, the method 600 does not necessarily include a minimum, an optimal, or a maximum number of operations to implement the systems, methods, and/or techniques described herein.

In some embodiments, the method 600 may be performed by or utilizing the vehicle navigation system 200 of FIG. 2, where the vehicle navigation system 200 may include and/or utilize a computing device 202, a sensor system 204, a vehicle infotainment system 206, a steering system 208, a GNSS receiver 210, a communication device 212, a combination thereof, and/or components thereof of FIG. 2.

In some embodiments, in operation 602, the method 600 may include displaying, on an electronic display, a GUI including a field to display a digital image of a view from a vehicle.

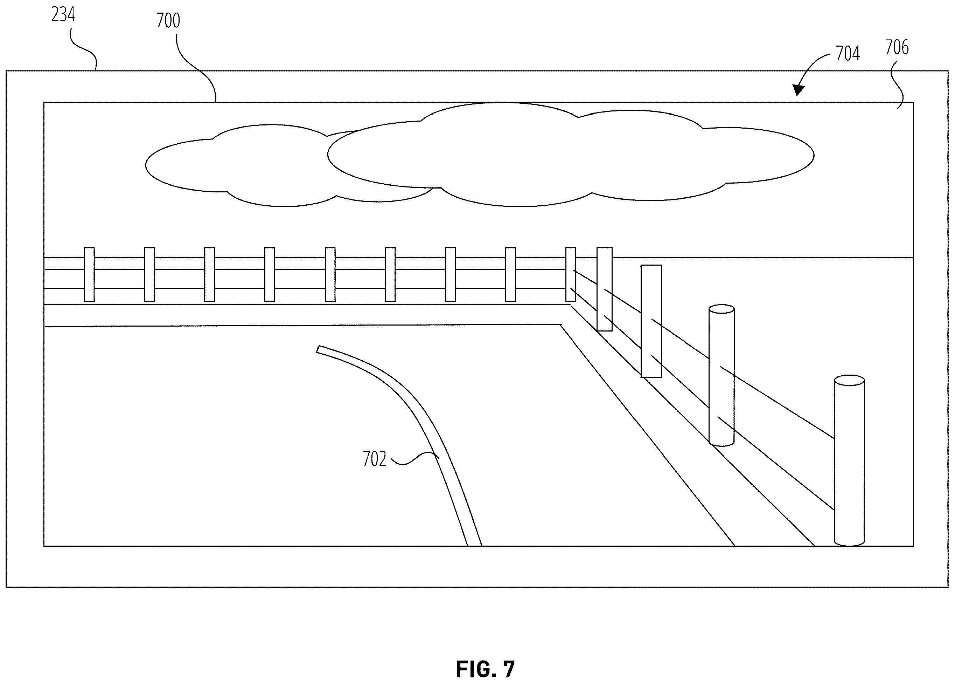

FIG. 7 is a front view of an electronic display 234 of the vehicle navigation system 200 of FIG. 2 and from the cockpit 300 of FIG. 3 presenting an example of a GUI 704 including a field 706 to display a digital image 700 of a view from a vehicle. Referring to FIG. 6 and FIG. 7 together, in some embodiments, the digital image 700 may estimate a view from the cockpit 300 of FIG. 3.

In some embodiments, in operation 604, the method 600 of FIG. 6 may include overlaying a preliminary arc 702 of FIG. 7 onto the digital image, the preliminary arc estimating a forward trajectory of the vehicle. In some embodiments, in operation 606, the method 600 may include adjusting a curvature of the preliminary arc 702 based, at least in part, on inputs received from a user. For example, the curvature of the preliminary arc 702 displayed on the electronic display 234 may change when the driver uses the steering system 208, the steering wheel 244, the joystick 246, the nudge buttons 248 of the joystick 246, and/or nudge tabs on the electronic display 234. The driver may adjust the curvature of the preliminary arc 702 until satisfied with the curvature of the preliminary arc 702.

In some embodiments, in operation 608, the method 600 may include determining an estimate of the path based, at least in part, on the preliminary arc 702. The estimate of the path may be, for example, an estimate of the path 104 of FIG. 1. Additionally, or alternatively, in operation 608, the method 600 may include determining an estimate of the path based, at least in part, on the preliminary arc (e.g., preliminary arc 702) by converting image spatial coordinates of points of the preliminary arc to navigational coordinates of the points of the preliminary arc. Additionally, or alternatively, in operation 608, the method 600 may include determining an estimate of the path by fitting the navigational coordinates of the points of the preliminary arc to a portion of a circle using a mathematical function defining the circle, and/or extrapolating the estimate of the path based, at least in part, on the mathematical function.

In some embodiments, in operation 610, the method 600 may include providing vehicle guidance to guide the vehicle along the estimate of the path. For example, the vehicle navigation system 200 of FIG. 2 may guide the driver to drive the vehicle 102 through the path 104 of FIG. 1. Additionally, or alternatively, the driver may use nudge buttons (e.g., nudge buttons 248 of FIG. 2 and/or FIG. 3) to steer the vehicle 102 of FIG. 1 to traverse the path. Additionally, or alternatively, in operation 610, the method 600 may include adjusting a curvature and/or shape of the path based, for example, on inputs received from the driver. Additionally, or alternatively, in the operation 610, the method 600 may include driving the vehicle 102 of FIG. 1 automatically, autonomously, or semi-autonomously along a path (e.g., path 104) inside a circular area (e.g., area 100 of FIG. 1). In such a scenario, the driver may pay attention to the driving of the vehicle to safely traverse the path and/or complete a process. In some embodiments, the driver may override the automatic, autonomous, or semi-autonomous driving of the vehicle 102 of FIG. 1.

In some embodiments, in operation 612, the method 600 may include determining a center pivot point of the path based, at least in part, on the estimate of the path and adjustments made to the motion of the vehicle away from the estimate of the path. Additionally, or alternatively, in operation 612, the method 600 may include determining a preliminary center pivot point of the path by determining a center point of the circle defined by the mathematical function. Additionally, or alternatively, in operation 612, the method 600 may include determining the center pivot point by, for example, fitting navigational coordinates of an actual path traversed by the vehicle to a circle using a mathematical function defining the circle, and/or determining the center pivot point of the path to be a center point of the circle defined by the mathematical function.

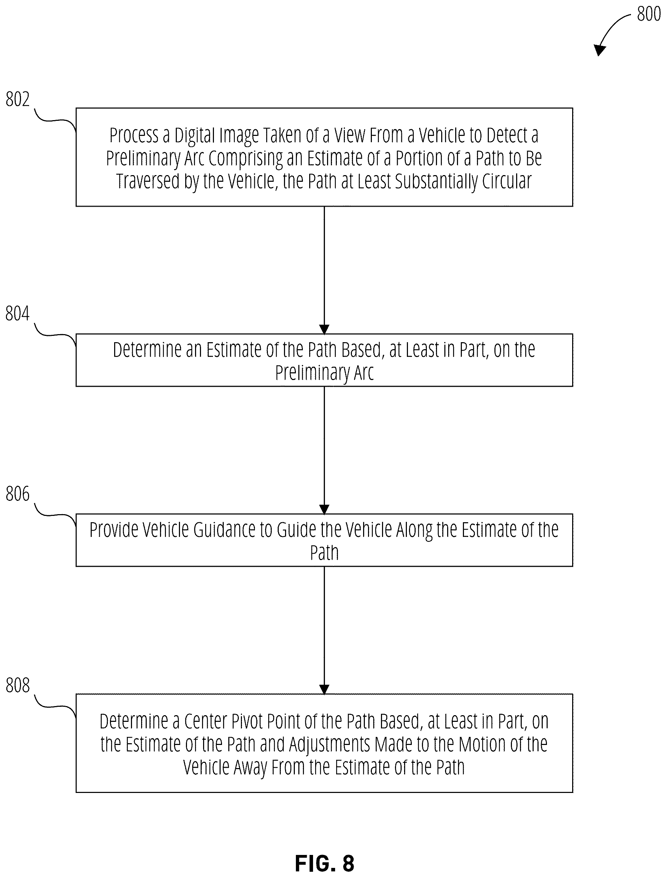

FIG. 8 is a flowchart illustrating a method 800 of operating a navigation system involving detecting a preliminary arc in a digital image, according to some embodiments. FIG. 8 is illustrated and/or described in the context of FIG. 1, FIG. 2, and/or FIG. 3. FIG. 8 is an example of the method 400 of FIG. 4.

In some embodiments, the operations of the method 800 do not necessarily need to be executed in any specific order, or even sequentially, nor need the operations be executed only once, unless otherwise specified. In some embodiments, the method 800 may be utilized by using one, more than one, and/or all the operations illustrated in FIG. 8. Therefore, the method 800 does not necessarily include a minimum, an optimal, or a maximum number of operations to implement the systems, methods, and/or techniques described herein.

In some embodiments, the method 800 may be performed by or utilizing the vehicle navigation system 200 of FIG. 2, where the vehicle navigation system 200 may include and/or utilize a computing device 202, a sensor system 204, a vehicle infotainment system 206, a steering system 208, a GNSS receiver 210, a communication device 212, a combination thereof, and/or components thereof of FIG. 2.

In some embodiments, the method 800 of FIG. 8 may be particularly useful when the GNSS receiver 210 and/or communication device 212 may not be operational for some reason. In such a case, the method 800 may utilize other components of the vehicle navigation system 200 of FIG. 2, such as the sensor system 204 of FIG. 2.

In some embodiments, in operation 802, the method 800 may include processing a digital image taken of a view from a vehicle to detect a preliminary arc comprising an estimate of a portion of a path to be traversed by the vehicle, the path at least substantially circular.

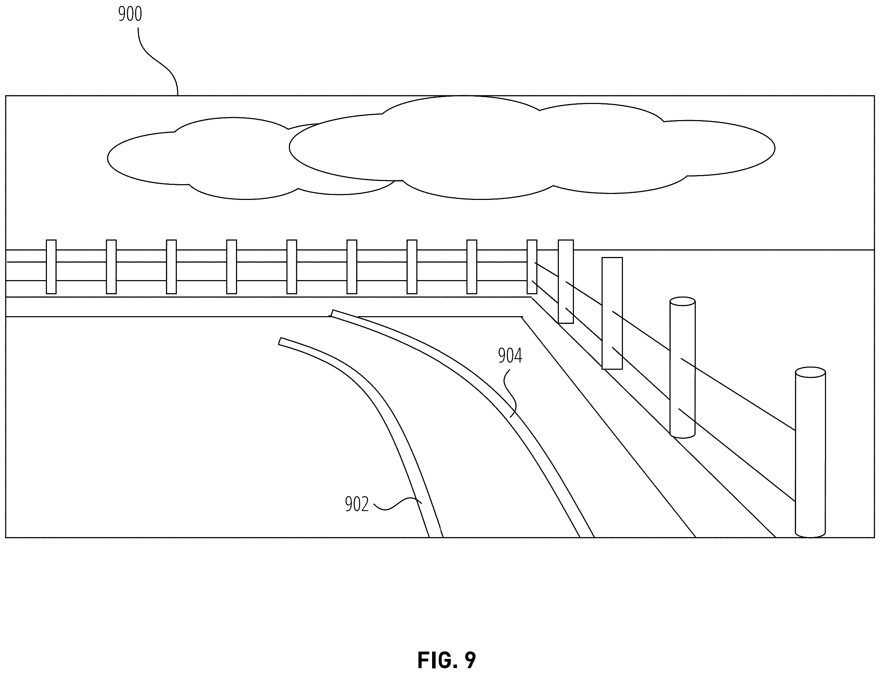

FIG. 9 is a front view of an example of a digital image 900 that may be processed to detect a preliminary arc. Referring to FIG. 8 and FIG. 9 together, the vehicle navigation system 200 may utilize the sensor system 204 of FIG. 2 to capture data (e.g., image data, point cloud data, etc.) that may be processed to detect the preliminary arc. To do so, the sensor system 204 may utilize the Lidar 222, the image sensor 224, and/or other sensors. Additionally, or alternatively, the processing of the digital image 900 may include using edge detection to detect the preliminary arc using the sensor system 204 of FIG. 2. Additionally, or alternatively, the processing of the digital image 700 may include detecting tire tracks in the digital image 700 to detect the preliminary arc. As illustrated in FIG. 9, the digital image 900 displays tire treads 902 and 904 that may have been left from a previous pass around the path that is desired to be traversed. A curvature of lines from detected tire treads 902 and 904 may be used as a curvature for the preliminary arc. Additionally, or alternatively, the processing of a digital image may include detecting an edge of vegetation to detect the preliminary arc using the sensor system 204 of FIG. 2. Detected curvatures of edges such as these may also be used to determine a curvature for the preliminary arc.

In some embodiments, in operation 804, the method 800 may include determining an estimate of the path based, at least in part, on the preliminary arc. Additionally, or alternatively, the determination of the estimate of the path may include converting image spatial coordinates of points of the preliminary arc to navigational coordinates of the points of the preliminary arc; fitting the navigation coordinates of the points of the preliminary arc to a portion of a circle using a mathematical function defining the circle; and/or extrapolating the estimate of the path based, at least in part, on the mathematical function.

In some embodiments, in operation 806, the method 800 may include providing vehicle guidance to guide the vehicle along the estimate of the path. For example, the vehicle navigation system 200 of FIG. 2 may guide the driver to drive the vehicle 102 through the path 104 of FIG. 1. Additionally, or alternatively, the driver may use nudge buttons (e.g., nudge buttons 248 of FIG. 2 and/or FIG. 3) to steer the vehicle 102 of FIG. 1 to traverse the path. Additionally, or alternatively, in operation 806, the method 800 of FIG. 8 may include adjusting a curvature and/or shape of the path based, for example, on inputs received from the driver. Additionally, or alternatively, in operation 806, the method 800 may include driving the vehicle 102 of FIG. 1 automatically, autonomously, or semi-autonomously along a path (e.g., path 104) inside a circular area (e.g., area 100 of FIG. 1). In such a scenario, the driver may pay attention to the driving of the vehicle to safely traverse the path and/or complete a process. In some embodiments, the driver may override the automatic, autonomous, or semi-autonomous driving of the vehicle 102 of FIG. 1.

In some embodiments, in operation 808, the method 800 of FIG. 8 may include determining a center pivot point of the path based, at least in part, on the estimate of the path and adjustments made to the motion of the vehicle away from the estimate of the path. Additionally, or alternatively, the determination of the center pivot point of the path may include fitting navigational coordinates of an actual path traversed by the vehicle to a circle using a mathematical function defining the circle, and/or determining the center pivot point of the path to be a center point of the circle defined by the mathematical function.

As used in the present disclosure, the terms "module" or "component" may refer to specific hardware implementations configured to perform the actions of the module or component and/or software objects or software routines that may be stored on and/or executed by general purpose hardware (e.g., computer-readable media, processing devices, etc.) of the computing system. In some embodiments, the different components, modules, engines, and services described in the present disclosure may be implemented as objects or processes that execute on the computing system (e.g., as separate threads). While some of the system and methods described in the present disclosure are generally described as being implemented in software (stored on and/or executed by general purpose hardware), specific hardware implementations or a combination of software and specific hardware implementations are also possible and contemplated.

As used in the present disclosure, the term "combination" with reference to a plurality of elements may include a combination of all the elements or any of various different sub-combinations of some of the elements. For example, the phrase "A, B, C, D, or combinations thereof" may refer to any one of A, B, C, or D; the combination of each of A, B, C, and D; and any sub-combination of A, B, C, or D such as A, B, and C; A, B, and D; A, C, and D; B, C, and D; A and B; A and C; A and D; B and C; B and D; or C and D.

Terms used in the present disclosure and especially in the appended claims (e.g., bodies of the appended claims) are generally intended as "open" terms (e.g., the term "including" should be interpreted as "including, but not limited to," the term "having" should be interpreted as "having at least," the term "includes" should be interpreted as "includes, but is not limited to," etc.).

Additionally, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations.

In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." or "one or more of A, B, and C, etc." is used, in general such a construction is intended to include A alone, B alone, C alone, A and B together, A and C together, B and C together, or A, B, and C together, etc.

Further, any disjunctive word or phrase presenting two or more alternative terms, whether in the description, claims, or drawings, should be understood to contemplate the possibilities of including one of the terms, either of the terms, or both terms. For example, the phrase "A or B" should be understood to include the possibilities of "A" or "B" or "A and B."

All references cited herein are incorporated herein in their entireties. If there is a conflict between definitions herein and in an incorporated reference, the definition herein shall control.

While the present disclosure has been described herein with respect to certain illustrated embodiments, those of ordinary skill in the art will recognize and appreciate that the present invention is not so limited. Rather, many additions, deletions, and modifications to the illustrated and described embodiments may be made without departing from the scope of the invention as hereinafter claimed along with their legal equivalents. In addition, features from one embodiment may be combined with features of another embodiment while still being encompassed within the scope of the invention as contemplated by the inventor.

## Claims

1. A vehicle navigation system, comprising:
one or more processors; and
one or more data storage devices having computer-readable instructions stored thereon, the computer-readable instructions configured to instruct the one or more processors to:
automatically detect, from a digital image estimating a view from a vehicle, a preliminary arc comprising an estimate of a portion of a path to be traversed by the vehicle, the path at least substantially circular;
determine an estimate of the path based, at least in part, on the preliminary arc;
provide vehicle guidance to guide motion of the vehicle along the estimated path; and
determine a center pivot point of the path based, at least in part, on the estimated path and adjustments made to the motion of the vehicle away from the estimated path.

2. The vehicle navigation system of claim 1, wherein the computer-readable instructions are further configured to instruct the one or more processors to:
determine one or more subsequent paths to be traversed by the vehicle based, at least in part, on the center pivot point, the one or more subsequent paths at least substantially circular and having diameters different from a diameter of the path; and
provide vehicle guidance to guide motion of the vehicle along the one or more subsequent paths.

3. The vehicle navigation system of claim 1, wherein the adjustments made to the motion of the vehicle away from the estimated path are:
made using a device other than a steering wheel of the vehicle; or
made by user interactions with nudge buttons of a joystick device.

4. The vehicle navigation system of claim 1, wherein the computer-readable instructions are configured to instruct the one or more processors to determine the estimate of the path based, at least in part, on an extrapolation from the preliminary arc.

5. The vehicle navigation system of claim 1, further comprising an image capture system secured to the vehicle, the image capture system configured to capture digital images to be used for automatically detecting the preliminary arc.

6. The vehicle navigation system of claim 5, wherein the image capture system includes a digital camera system; or a light detection and ranging (LiDAR) system.

7. The vehicle navigation system of claim 1, wherein the computer-readable instructions are further configured to instruct the one or more processors to detect the preliminary arc by:
detecting a curve shown by the digital image;
detecting tire tracks in the digital image;
detecting a vegetation edge in the digital image; or
detecting an edge of a field shown in the digital image.

8. A method of operating a vehicle navigation system, the method comprising:
processing a digital image taken of a view from a vehicle to detect a preliminary arc comprising an estimate of a portion of a path to be traversed by the vehicle, the path at least substantially circular;
determining an estimate of the path based, at least in part, on the preliminary arc;
providing vehicle guidance to guide the vehicle along the estimate of the path; and
determining a center pivot point of the path based, at least in part, on the estimate of the path and adjustments made to the motion of the vehicle away from the estimate of the path.

9. The method of claim 8, wherein processing the digital image comprises using edge detection to detect the preliminary arc.

10. The method of claim 8, wherein processing the digital image comprises detecting tire tracks in the digital image to detect the preliminary arc.

11. The method of claim 8, wherein processing the digital image comprises detecting an edge of vegetation to detect the preliminary arc.

12. The method of claim 8, wherein determining an estimate of the path comprises:
converting image spatial coordinates of points of the preliminary arc to navigational coordinates of the points of the preliminary arc;
fitting the navigation coordinates of the points of the preliminary arc to a portion of a circle using a mathematical function defining the circle; and
extrapolating the estimate of the path based, at least in part, on the mathematical function.

13. The method of claim 8, wherein determining a center pivot point of the path comprises:
fitting navigational coordinates of an actual path traversed by the vehicle to a circle using a mathematical function defining the circle; and
determining the center pivot point of the path to be a center point of the circle defined by the mathematical function.

14. A vehicle navigation system, comprising:
a vehicle;
an imaging system secured to the vehicle, the imaging system configured to capture a digital image of a view from the vehicle;
one or more processors configured to:
detect a preliminary arc from the digital image, the preliminary arc defining a portion of a path to be traversed by the vehicle, the path at least substantially circular; and
determine an estimate of the path based, at least in part, on the preliminary arc; and
a vehicle guidance system configured to guide the vehicle along the estimate of the path;
wherein the one or more processors are further configured to determine the center pivot point of the path based, at least in part, on the estimate of the path and adjustments made to the motion of the vehicle away from the estimate of the path.

15. The vehicle navigation system of claim 14, wherein the vehicle comprises an agricultural machine.
